# EUROPEAN PATENT APPLICATION

(11) **EP 4 606 765 A1**
(43) Date of publication of application: **27.08.2025**
(21) Application number: 23879756.7
(22) Date of filing: 16.10.2023
(51) Int. Cl.: C01B 32/164, D01F 9/12, D01F 9/133

(54) **CARBON NANOTUBE RECOVERING DEVICE, CARBON NANOTUBE PRODUCTION DEVICE, AND METHOD FOR RECOVERING CARBON NANOTUBES**

(30) Priority: 17.10.2022 JP 2022166412
(71) Applicant: Dowa Thermotech Co., Ltd., Chiyoda-ku Tokyo 101-0021 (JP); Meijo Nano Carbon Co., Ltd., Nagoya-shi, Aichi 463-0003 (JP); Osaka Soda Co., Ltd., Osaka-shi Osaka 550-0011 (JP)
(72) Inventor: FUJITA, Takahiro, Tokyo 101-0021 (JP); HASHIMOTO, Takeshi, Nagoya-shi, Aichi 463-0003 (JP); TAKANO, Kei, Nagoya-shi, Aichi 463-0003 (JP); KAGAWA, Hisato, Osaka-shi, Osaka 550-0011 (JP)
(74) Representative: Müller-Boré & Partner Patentanwälte PartG mbB
(86) International application number: PCT/JP2023/037391
(87) International publication number: WO 2024/085113

(57) **Abstract**

A carbon nanotube collection apparatus for collecting a carbon nanotube, the carbon nanotube collection apparatus includes: a winding room; a collection room; a first exhaust line which exhausts a gas supplied into the collection room; and a second exhaust line which exhausts a gas supplied into the winding room, wherein: the collection room includes a first opening part communicating with the winding room, and includes an opening/closing mechanism which opens and closes the first opening part; and exhaust from the first exhaust line, exhaust from the second exhaust line, and exhaust from both the first exhaust line and the second exhaust line are configured to be changeable.

## Description

### TECHNICAL FIELD

The present invention relates to a carbon nanotube collection apparatus for collecting a carbon nanotube, a carbon nanotube manufacturing apparatus having the carbon nanotube collection apparatus, and a carbon nanotube collection method.

### BACKGROUND ART

The carbon nanotube has excellent characteristics such as electrical conductivity, thermal conductivity, mechanical strength, and so on, and is thus a new material attracting attention in many fields. As a carbon nanotube manufacturing apparatus, there is known a manufacturing apparatus using the chemical vapor deposition method (namely, the CVD method) of producing the carbon nanotube by thermally decomposing a raw material containing carbon (carbon source) disclosed in Patent Document 1.

Besides, Patent Document 2 discloses the provision of a carbon nanotube collection apparatus in or near a collection part of a reaction furnace for producing the carbon nanotube by the CVD method. The collection apparatus disclosed in Patent Document 2 rolls a winding member for winding the carbon nanotube to wind the carbon nanotube into a roll shape and form a wound body, and takes the wound body out from a takeout port provided in the collection part to collect the carbon nanotube.

### PRIOR ART DOCUMENT

### PATENT DOCUMENT

Patent Document 1: Japanese Laid-open Patent Publication No. 2019-064918
Patent Document 2: Japanese Laid-open Patent Publication No. 2004-190166

### SUMMARY OF THE INVENTION

### PROBLEMS TO BE SOLVED BY THE INVENTION

In the carbon nanotube collection apparatus disclosed in Patent Document 2, the wound body is taken out of the collection part at the stage that the wound body of the carbon nanotube reaches a predetermined diameter. Therefore, every time one wound body of the carbon nanotube is manufactured, it is necessary to stop the carbon nanotube production apparatus, and to lower temperatures of the reaction furnace and the collection part to an ordinary temperature so as to collect the manufactured wound body. Further, in resuming the production of the carbon nanotube, it is necessary to raise a temperature of an atmosphere in the reaction furnace to a temperature suitable for the production of the carbon nanotube.

In other words, every time the carbon nanotube is collected, the carbon nanotube collection apparatus disclosed in Patent Document 2 is required for the temperature of the reaction furnace to be lowered and raised again, which makes a time during which the carbon nanotube fails to be produced in the reaction furnace longer. Therefore, in the case of massively manufacturing the carbon nanotube, a long time has been required until the manufacture of a desired amount of carbon nanotubes is completed.

The present invention has been made in consideration of the above circumstances, and has an object to provide a carbon nanotube collection apparatus, a carbon nanotube manufacturing apparatus, and a carbon nanotube manufacturing method capable of shortening a time to manufacture a desired amount of carbon nanotubes in massively manufacturing carbon nanotubes.

### MEANS FOR SOLVING THE PROBLEMS

In order to solve the above problem, the present inventors have found that carbon nanotubes can be collected without lowering a temperature of a production apparatus by blocking an atmosphere between the production apparatus and a collection apparatus of the carbon nanotubes, and come to complete the present invention.

An aspect of the present invention for solving the above problem is exemplified below.
[1] A carbon nanotube collection apparatus for collecting a carbon nanotube produced by a carbon nanotube production apparatus, the carbon nanotube collection apparatus including:
   a winding room for winding the carbon nanotube;
   a collection room, provided on a side lower than the winding room, for collecting the carbon nanotube;
   a first exhaust line which exhausts a gas supplied into the collection room;
   an exhaust port to which the first exhaust line is connected; and
   a second exhaust line which exhausts a gas supplied into the winding room, wherein:
      the winding room includes:
      a winding member which winds the carbon nanotube; and
      an exhaust port to which the second exhaust line is connected;
      the collection room includes
      a first opening part communicating with the winding room, and is provided with
      an opening/closing mechanism which opens and closes the first opening part; and
      exhaust from the first exhaust line, exhaust from the second exhaust line, and exhaust from both the first exhaust line and the second exhaust line are configured to be changeable.
[2] The carbon nanotube collection apparatus according to [1], further including
   a control unit which controls operation of the first exhaust line and the second exhaust line, wherein
   the control unit is configured to execute control of
   performing the exhaust from at least the first exhaust line in a step of storing a wound body formed by winding the carbon nanotube in the collection room with the first opening part open, and
   performing the exhaust from at least the second exhaust line in a step of collecting the carbon nanotube in the collection room with the first opening part closed.
[3] The carbon nanotube collection apparatus according to [1] or [2], wherein
   the exhaust port is located on a side lower than the winding member.
[4] The carbon nanotube collection apparatus according to any one of [1] to [3], wherein the second exhaust line includes:
   a filter which collects the carbon nanotube in an exhaust gas; and
   a cleaning mechanism which separates the carbon nanotube adhered to the filter.
[5] The carbon nanotube collection apparatus according to any one of [1] to [4], further including
   a third exhaust line which exhausts the gas supplied into the winding room, wherein
   the exhaust from the second exhaust line and exhaust from the third exhaust line are configured to be changeable.
[6] The carbon nanotube collection apparatus according to any one of [1] to [5], wherein
   a collection basket in a mesh shape which is installed to be attachable to and detachable from the collection room is provided inside the collection room.
[7] The carbon nanotube collection apparatus according to any one of [1] to [6], further including
   a compression mechanism which compresses the carbon nanotube stored in the collection room.
[8] The carbon nanotube collection apparatus according to any one of [1] to [7], wherein:
   the collection room includes:
   a housing; and
   a storage container provided under the housing;
   the first opening part, the opening/closing mechanism, and a second opening part communicating with the storage container are provided in the housing; and
   the storage container is attached to be attachable to and detachable from the housing.
[9] A carbon nanotube manufacturing apparatus including:
   a production apparatus which produces a carbon nanotube; and
   the carbon nanotube collection apparatus according to any one of [1] to [8].
[10] A carbon nanotube collection method using the carbon nanotube collection apparatus according to [1], the carbon nanotube collection method including:
   a storage step of storing a wound body formed by winding a carbon nanotube produced by a carbon nanotube production apparatus in the collection room with the first opening part open; and
   a collection step of collecting the carbon nanotube in the collection room with the first opening part closed, wherein:
      in the storage step, exhaust from at least the first exhaust line is performed; and
      in the collection step, exhaust from at least the second exhaust line is performed.
[11] The carbon nanotube collection method according to [10], wherein
   the exhaust with the second exhaust line is performed on a side lower than a winding member which winds the carbon nanotube.
[12] The carbon nanotube collection method according to [10] or [11], wherein
   using a cleaning mechanism which separates the carbon nanotube adhered to a filter provided in the second exhaust line, an inner surface of the filter is regularly cleaned.
[13] The carbon nanotube collection method according to [12], wherein
   a third exhaust line is used in place of the second exhaust line when the cleaning of the filter or replacement work of the filter is performed.
[14] The carbon nanotube collection method according to any one of [10] to [13], wherein:
   in the storage step, the carbon nanotube is stored in a collection basket in a mesh shape which is installed inside the collection room; and
   in the collection step, the collection basket in which the carbon nanotube is stored is changed with another collection basket.
[15] The carbon nanotube collection method according to any one of [10] to [14], wherein
   in the storage step, the carbon nanotube stored in the collection room is compressed.
[16] The carbon nanotube collection method according to any one of [10] to [15], wherein:
   the collection room includes:
   a housing; and
   a storage container attached to be attachable to and detachable from the housing under the housing; and
   in the collection step, the storage container is detached from the housing to collect the carbon nanotube in the storage container.

### EFFECT OF THE INVENTION

According to the present invention, it is possible to provide a carbon nanotube collection apparatus, a carbon nanotube manufacturing apparatus, and a carbon nanotube manufacturing method capable of shortening a time to manufacture a desired amount of carbon nanotubes in massively manufacturing carbon nanotubes.

### BRIEF DESCRIPTION OF THE DRAWINGS

FIG. 1 is an explanatory view illustrating a schematic configuration of a carbon nanotube manufacturing apparatus according to a first embodiment.
FIG. 2 is a view for explaining a winding structure of a carbon nanotube.
FIG. 3 is a view illustrating a state where a winding member has moved to a pull-out position.
FIG. 4 is a view for explaining a collection basket in a mesh shape.
FIG. 5 is a view for explaining a filter cleaning mechanism of a second exhaust line.
FIG. 6 is a view for explaining another configuration example of the filter cleaning mechanism.
FIG. 7 is a view for explaining a carbon nanotube collection method.
FIG. 8 is a view illustrating an example of providing an incombustible gas supply mechanism in a second exhaust line.
FIG. 9 is a view for explaining a gas purge in pipes before exhaust from the second exhaust line is started.
FIG. 10 is a view for explaining a third exhaust line.
FIG. 11 is a view for explaining a flow of an exhaust gas in using the second exhaust line and a flow of the exhaust gas in using the third exhaust line.
FIG. 12 is a view illustrating an example of providing incombustible gas supply mechanisms in the second exhaust line and the third exhaust line.
FIG. 13 is a view for explaining a gas purge in pipes before exhaust from the second exhaust line or the third exhaust line is started.
FIG. 14 is a view for explaining a compression mechanism of carbon nanotubes.
FIG. 15 is a view illustrating a carrying state in a storage container when the compression mechanism in FIG. 14 is used.
FIG. 16 is an explanatory view illustrating a schematic configuration of a carbon nanotube manufacturing apparatus according to a second embodiment.
FIG. 17 is a view for explaining a carbon nanotube collection method.
FIG. 18 is a view illustrating a configuration example of a carbon nanotube manufacturing apparatus in which a reaction furnace is installed on a side surface portion of a winding room.

### EMBODIMENTS FOR CARRYING OUT INVENTION

Hereinafter, embodiments of the present invention will be explained with reference to the drawings. Note that in this description and the drawings, the same codes are given to elements having substantially the same functional configurations to omit duplicate explanations.

### (First Embodiment)

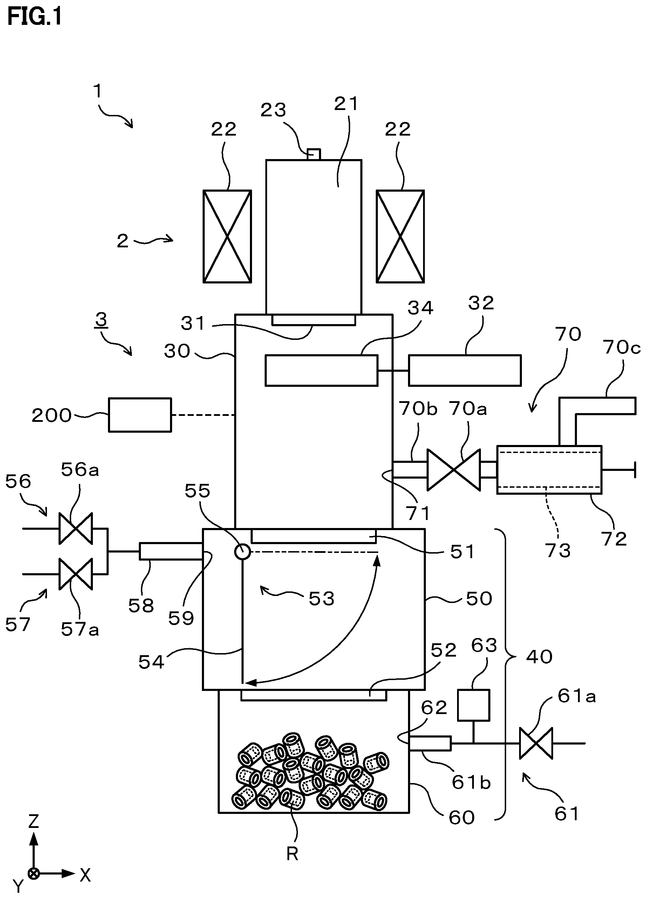

FIG. 1 is an explanatory view illustrating a schematic configuration of a CNT manufacturing apparatus 1 which manufactures a carbon nanotube (hereinafter, referred to as "CNT") according to a first embodiment. Note that the CNT in this description is a tubular carbon allotrope (typically, a cylindrical structure with a graphite structure), and includes a so-called single-walled CNT, multi-walled CNT, or carbon nanohorn having a horn-shaped tube tip. The CNT manufacturing apparatus 1 is used suitably for the manufacture of the single-walled CNTs in particular.

As illustrated in FIG. 1, the CNT manufacturing apparatus 1 has a production apparatus 2 which produces CNTs, and a collection apparatus 3 which is provided at a lower end portion of the CNT production apparatus 2 and collects the CNTs. Note that an "X-direction" in the drawings is a depth direction of the collection apparatus 3, a "Y-direction" is a width direction of the collection apparatus 3, and a "Z-direction" is a height direction of the collection apparatus 3. The directions X to Z are perpendicular to one another.

### <Carbon nanotube production apparatus>

An apparatus configuration of the production apparatus 2 is not particularly limited as long as it can produce a CNT. Thus, as the production apparatus 2, the apparatus using the chemical vapor deposition method (namely, the CVD method) of thermally decomposing a source gas containing carbon to produce CNTs as in Patent Document 1 or Patent Document 2 is applicable, for example.

The production apparatus 2 exemplified in FIG. 1 has a reaction furnace 21, a heater 22 which is provided on a lateral side of the reaction furnace 21, and a raw material supply port 23 for supplying a raw material for the CNT production to the reaction furnace 21.

The shape of the reaction furnace 21 is not limited, but is preferably, for example, a straight pipe shape (namely, a shape with a linearly extending axis). Further, the cross-sectional shape of the reaction furnace 21 may be a rounded shape such as a circular shape, an elliptical shape, an egg shape, or an oval shape, or a polygonal shape.

The shape and the heating method of the heater 22 are not particularly limited as long as they can heat the reaction furnace 21 to a temperature suitable for the production of the CNT. The heater 22 only needs to be able to heat the reaction furnace 21, for example, to 500°C to 2000°C, and preferably to 1000°C to 1600°C. As a concrete example of the heater 22, there is a tungsten heater capable of heating the reaction furnace 21 to 500°C to 2000°C or a silicon carbide heater (SiC heater) capable of heating the reaction furnace 21 to 600 to 1600°C.

A carrier gas such as, for example, a hydrogen gas is also supplied to the raw material supply port 23 together with gas being a carbon source and a raw material such as a catalytic metal or a catalytic metal compound.

### <Carbon nanotube collection apparatus>

The collection apparatus 3 includes a winding room 30 for winding the CNT produced by the production apparatus 2 and a collection room 40 for collecting a CNT wound body R formed in the winding room 30.

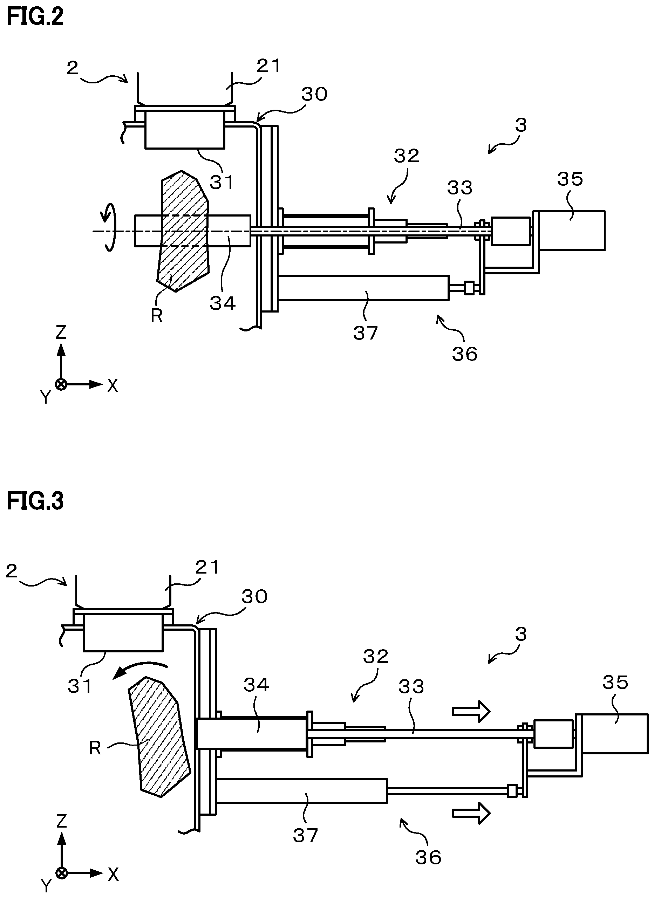

First, the winding room 30 and its peripheral structure will be explained with reference to FIG. 2.

An opening part 31 communicating with a lower end of the reaction furnace 21 of the production apparatus 2 is provided in a ceiling surface portion of the winding room 30. The CNTs produced in the reaction furnace 21 are transported together with the carrier gas into the winding room 30 through the opening part 31.

The winding mechanism 32 for winding the CNTs is provided at a side surface portion of the winding room 30. The winding mechanism 32 has a rotary body 33, a winding member 34, and a driving part 35.

The rotary body 33 is, for example, a columnar or cylindrical member, and is arranged such that the rotation axis direction is oriented in the horizontal direction (the X direction in this embodiment). The rotary body 33 is provided in a manner to penetrate the side surface portion of the winding room 30, and a part of the rotary body 33 projects into the winding room 30.

The winding member 34 is a member which extends in the axial direction of the rotary body 33, and is constituted of, for example, a columnar or cylindrical roller. A base end of the winding member 34 is attached to a tip of the rotary body 33 (an end portion on the winding room 30 side). Note that the installation position of the winding member 34 is not particularly limited, but the winding member 34 only needs to be installed at a position where it can come into contact with the CNTs passed through the opening part 31.

The driving part 35 is provided outside the winding room 30. As the driving part 35, for example, a motor or the like is used. The rotary body 33 to which the winding member 34 is attached is connected to the driving part 35, so that when the rotary body 33 is rotated by the driving part 35, the winding member 34 also rotates integrally with the rotary body 33. The rotation speed of the rotary body 33 is appropriately set according to the production speed of the CNTs and the size of a desired CNT wound body R, and is set to, for example, 0.01 to 500 rpm.

A separation mechanism 36 which separates the CNT wound body R formed around the winding member 34 is also provided outside the winding room 30. The separation mechanism 36 is a mechanism which moves the above rotary body 33, winding member 34, and driving part 35 in a direction from the inside toward the outside of the winding room 30. In other words, the separation mechanism 36 is a mechanism which moves the winding member 34 in a direction of pulling it out of the winding room 30, and the rotary body 33 and the winding member 34 can be moved from a tip end side toward the base end side of the winding member 34 by the separation mechanism 36.

In this embodiment, as one example of the separation mechanism 36, a cylinder mechanism 37 is provided outside the winding room 30. The winding member 34 moves between a position where the CNTs are wound (winding position) illustrated in FIG. 2 and a position where the CNT wound body R is separated from the winding member 34 (pull-out position) illustrated in FIG. 3 by an expanding and contracting operation of the cylinder mechanism 37. In short, the winding member 34 can move in a direction of coming close to or separating from the side surface portion of the winding room 30.

In the collection apparatus 3 having the above separation mechanism 36, the winding member 34 located at the winding position forms the CNT wound body R, and then the winding member 34 is retracted to the pull-out position to bring the CNT wound body R into contact with an inner surface of the side surface portion of the winding room 30. Then, in this state, the winding member 34 is further retracted to bring an inner peripheral surface of the CNT wound body R into a state where its inner peripheral surface is not supported any longer by the winding member 34.

This causes the CNT wound body R to fall off the winding member 34 to separate the CNT wound body R and the winding member 34. Thereafter, the winding member 34 moves forward from the pull-out position to the winding position and starts to wind the CNT for forming a next CNT wound body R. Note that a configuration of the separation mechanism 36 is not limited to the configuration explained in this embodiment.

Next, the collection room 40 and its peripheral structure will be explained while referring to FIG. 1 again.

As illustrated in FIG. 1, the collection room 40 has a housing 50 and a storage container 60 provided under the housing 50.

A first opening part 51 communicating with the winding room 30 is provided in a ceiling surface portion of the housing 50, and a second opening part 52 communicating with the storage container 60 is provided in a bottom surface portion of the housing 50.

The first opening part 51 has a shape capable of passing the CNT wound body R formed in the winding room 30 therethrough. As previously described, the winding room 30 communicates with the reaction furnace 21 of the production apparatus 2 via the opening part 31, and thus the first opening part 51 of the housing 50 communicating with the winding room 30 can be rephrased as an opening part communicating with the production apparatus 2.

The second opening part 52 has a shape capable of passing the CNT wound body R formed in the winding room 30 therethrough, as the first opening part 51 has.

Inside the housing 50, a partition valve 53 is provided as an opening/closing mechanism which opens and closes the first opening part 51. The partition valve 53 allows a change between an open state and a closed state of the first opening part 51. The open state of the first opening part 51 is a state where the CNT can pass from the winding room 30 into the housing 50, and the closed state of the first opening part 51 is a state where an atmosphere in the winding room 30 and an atmosphere in the housing 50 are blocked between each other.

The partition valve 53 includes a valve element 54 in a plate shape and a pivot shaft part 55 which pivots the valve element 54. The pivot shaft part 55 is provided near a peripheral edge of the first opening part 51, and fixed such that the pivot shaft is oriented to the horizontal direction (the Y direction in this embodiment). The valve element 54 can turn clockwise or counterclockwise centered on the pivot shaft within a range of a predetermined angle by connecting one end of the valve element 54 to the pivot shaft part 55.

The valve element 54 has a shape capable of covering the first opening part 51, and a not-illustrated sealing member is provided on a surface, on a side facing the first opening part 51, of the valve element 54. Therefore, when the valve element 54 turns to be in a horizontal state, the presence of the sealing member causes the atmosphere in the winding room 30 and the atmosphere in the housing 50 to be blocked between each other.

Further, the configuration of the opening/closing mechanism of the first opening part 51 is not limited to the above configuration as long as the open and closed states of the first opening part 51 can be changed. For example, the opening/closing mechanism in FIG. 1 has the configuration in which the partition valve 53 is provided in the housing 50, and the valve element 54 is turned upward from the lower side to close the first opening part 51, but a configuration in which a partition valve (not illustrated) is provided in the winding room 30, and a valve element (not illustrated) of the partition valve is turned downward from the upper side to close the first opening part 51 may be applied. Alternatively, a door (not illustrated) slidable in the horizontal direction may be provided right over or right under the first opening part 51 to close the first opening part 51 in place of the partition valve 53.

However, the CNT discharged from the reaction furnace 21 sometimes falls without being wound by the winding member 34, and, for example, the CNT may also adhere to a bottom surface in the winding room 30. In this case, it is also considered that the structure in which the partition valve is provided in the winding room 30 and the valve element is turned downward from the upper side causes the CNT to be sandwiched between the valve element and the first opening part 51, and affects a sealing property. If the sealing property deteriorates, the maintenance work for removing the CNT adhered to a gap between the valve element and the first opening part 51 is necessary. Such a problem is likely to arise as also in the case of providing a door slidable in the horizontal direction as the opening/closing mechanism of the first opening part 51.

Consequently, from the viewpoint of reducing a maintenance frequency in addition to enhancing the sealing property, as illustrated in FIG. 1, the opening/closing mechanism of the first opening part 51 preferably has the structure in which the partition valve 53 is provided in the housing 50 and the valve element 54 is turned upward from the lower side.

A supply line 56 of an incombustible gas and a supply line 57 of air are provided outside the housing 50. The supply lines 56, 57 are provided with valves 56a, 57a respectively. The supply lines 56, 57 are connected to a gas supply pipe 58, and the incombustible gas or air is supplied to the gas supply pipe 58 by changing the open and closed states of the above valves 56a, 57a. The kind of incombustible gas is not particularly limited, but a nitrogen gas is preferably used.

A gas supply port 59 to which the gas supply pipe 58 is connected is formed in a side surface portion of the housing 50. The incombustible gas or air is supplied via the gas supply port 59 into the housing 50.

Note that in the above gas supply mechanism capable of changing a supply state and a stop state of the incombustible gas and changing a supply state and a stop state of air, the changes in the supply states and the stop states of the gases may be performed by worker's manual operation, or may be automatically performed by a control unit 200 to be described later for controlling the operation of the gas supply mechanism.

Next, the storage container 60 which the collection room 40 includes will be explained.

The storage container 60 is a container in which a part of an upper surface is open, and can house a plurality of CNT wound bodies R. In the storage container 60, the CNT wound bodies R passed through the first opening part 51 and the second opening part 52 of the housing 50 and fallen therein are temporarily stored. The CNT wound bodies R stored therein are collected from an openable/closable door (not illustrated) provided on the storage container 60.

Further, the storage container 60 is fixed on the bottom surface portion of the housing 50, and a non-illustrated sealing member is provided between the upper surface portion of the storage container 60 and the bottom surface portion of the housing 50. This sealing member prevents the atmosphere in the collection room 40 from flowing out from a gap between the housing 50 and the storage container 60 to the outside.

A first exhaust line 61 which exhausts the atmosphere in the collection room 40 is provided outside the storage container 60. The first exhaust line 61 has a valve 61a and an exhaust pipe 61b, and the exhaust pipe 61b is connected to an exhaust port 62 formed in a side surface portion of the storage container 60. The gas supplied into the housing 50 is exhausted via the exhaust port 62.

Note that the exhaust port 62 may be provided in not the storage container 60 but, for example, the housing 50, but the exhaust port 62 is preferably located on a side lower than the gas supply port 59. As described later, when the CNT wound bodies R are collected from the storage container 60, a process of replacing the atmosphere in the collection room 40 from the carrier gas to the incombustible gas is included, and in a case where a specific gravity of the carrier gas is lighter than a specific gravity of the incombustible gas, the carrier gas easily stays in an upper side in the housing 50.

On the other hand, when the exhaust port 62 is located on the side lower than the gas supply port 59, the incombustible gas flows downward from the upper side in the housing 50, thus facilitating the exhaust of the carrier gas by using the incombustible gas, and making it easy to replace the carrier gas atmosphere in the collection room 40 with the incombustible gas atmosphere. Further, as illustrated in FIG. 1, when the exhaust port 62 is provided in the storage container 60, the atmosphere replacement in the storage container 60 becomes easy.

An oxygen concentration meter 63 which measures an oxygen concentration in the exhaust gas is preferably provided in the first exhaust line 61. Using the oxygen concentration meter 63 makes it easy to predict what kinds of gases compose the atmosphere in the collection room 40, so that the collection of the CNT wound bodies R from the storage container 60 and reopening of the partition valve 53 which are described later can be each performed at proper timing. This enables the elimination of an extra waiting time likely to occur during a process from the collection of the CNTs to the resumption of the production.

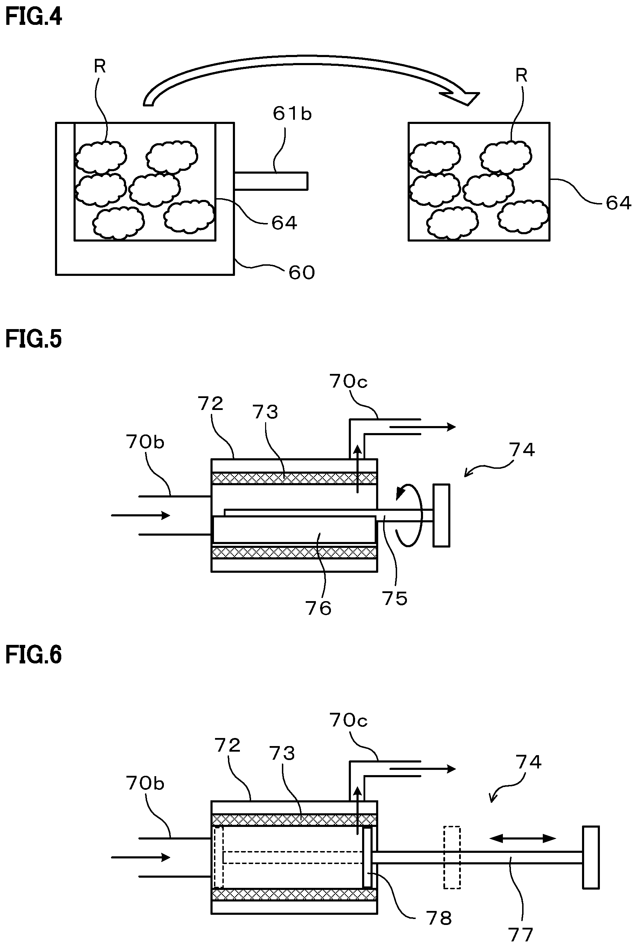

As illustrated in FIG. 4, a collection basket 64 capable of storing the CNT wound bodies R is preferably installed inside the storage container 60. The collection basket 64 is a mesh-shaped basket in which a plurality of opening portions are formed, and is attachable to and detachable from the storage container 60. A material of the collection basket 64 is not particularly limited as long as it has heat resistance to heat which the CNT wound bodies R fallen to the storage container 60 have, and, for example, metal material is used.

In a case of providing the collection basket 64, when the storage container 60 is detached from the housing 50, the CNT wound bodies R can be easily collected by taking the collection basket 64 in which the CNT wound bodies R are stored out of the storage container 60. Further, as long as another collection basket with the interior empty is installed in the storage container 60 out of which the collection basket 64 has been taken, a time of a collection step of the CNTs can be shortened.

Note that the collection basket 64 is formed in a mesh shape, thereby allowing the gas supplied into the housing 50 to pass through meshes of the collection basket 64, so that exhaust from the exhaust port 62 is not inhibited. In addition, a part of the CNTs sometimes falls without being wound by the winding member 34 (FIG. 1), but such a CNT is collected by the collection basket 64, and thus mixing of the CNT into the first exhaust line 61 can be suppressed. That is, the collection basket 64 in a mesh shape increases the cleanliness of the exhaust gas, and enables the environmentally friendly operation.

The housing 50 and the storage container 60 which the collection room 40 includes have been explained above, but the collection room 40 may be composed of one container without being divided into the housing 50 and the storage container 60. The collection room 40 in this case is provided with a space in which the CNT wound bodies R are stored under the partition valve 53.

As illustrated in FIG. 1, the collection apparatus 3 has a second exhaust line 70 which exhausts an atmosphere in the winding room 30 in addition to the above first exhaust line 61. The second exhaust line 70 is an exhaust line to be used mainly when the first opening part 51 is closed by the above partition valve 53.

The second exhaust line 70 has a valve 70a and an exhaust pipe 70b, and the exhaust pipe 70b is connected to an exhaust port 71 formed in the side surface portion of the winding room 30. The gas supplied into the winding room 30 is exhausted via the exhaust port 71.

Further, the exhaust port 71 is preferably formed on a side lower than the winding member 34. The CNT discharged from the reaction furnace 21 is light in weight, and is thus easily affected by a flow of the carrier gas going toward the exhaust port 71, but when the exhaust port 71 is located on the side lower than the winding member 34, the CNT easily comes into contact with the winding member 34 between the reaction furnace 21 and the exhaust port 71. This enables a reduction in an amount of a CNT not to be wound and an increase in a collection amount of the CNTs.

An enlarged-diameter part 72 in a cylindrical shape is provided on a downstream side of the valve 70a in the second exhaust line 70, and the exhaust pipe 70b communicating with the exhaust port 71 is connected to one end of the enlarged-diameter part 72. Another exhaust pipe 70c for exhausting an exhaust gas flown into the enlarged-diameter part 72 to the downstream side is connected to an outer peripheral surface of the enlarged-diameter part 72.

A filter 73 in a cylindrical shape is installed in the above enlarged-diameter part 72. The filter 73 is the one for collecting the CNT in the exhaust gas. An inside diameter of the filter 73 is larger than an inside diameter of the exhaust pipe 70b, and the exhaust gas flown from the exhaust pipe 70b to the enlarged-diameter part 72 passes through the filter 73, and flows toward the exhaust pipe 70c.

When such a filter 73 is installed, the cleanliness of the exhaust gas is increased to enable the environmentally friendly operation, and thus the filter 73 is preferably provided. Note that the filter 73 is composed of, for example, a metal pipe in a mesh shape, or the like, but a concrete structure of the filter 73 is not particularly limited as long as it allows the collection of the CNT suspended in the exhaust gas.

By the way, when the use of the second exhaust line 70 is continued, an amount of the CNT adhering to an inner surface of the filter 73 increases, and thus when clogging of the filter 73 occurs, a flow of the exhaust gas is inhibited. In this case, there is a possibility that pressures in the reaction furnace 21 and the winding room 30 illustrated in FIG. 1 rise and desired pressures fail to be held. Therefore, it is necessary to perform maintenance work such as cleaning or replacement of the filter 73 before the clogging of the filter 73 occurs.

However, the second exhaust line 70 (FIG. 1) cannot be used during the maintenance work of the filter 73, so that the operation of the production apparatus 2 of the CNT is sometimes required to be stopped in performing the maintenance work. Consequently, in order to secure a production time of the CNT for a longer time, a cleaning mechanism 74 which separates the CNT adhering to the filter 73 is preferably provided as illustrated in FIG. 5.

The cleaning mechanism 74 exemplified in FIG. 5 has a rod 75 which rotates by using, for example, a motor as a driving source, and a scraper 76 attached to an outer peripheral surface of the rod 75. The rod 75 penetrates the inside from the outside of the enlarged-diameter part 72 along the axial direction of the enlarged-diameter part 72, and a part of the rod 75 projects into the outside of the enlarged-diameter part 72. The scraper 76 is a flat plate having a length equal to a length of the filter 73 and a width slightly smaller than a radius of the inside diameter of the filter 73 in a cylindrical shape.

According to the cleaning mechanism 74 exemplified in FIG. 5, the rotation of the rod 75 causes the scraper 76 to rotate along an inner peripheral surface of the filter 73, and this enables the separation of the CNT adhered to the inner surface of the filter 73.

The configuration of the cleaning mechanism 74 may be, for example, a configuration illustrated in FIG. 6. The cleaning mechanism 74 exemplified in FIG. 6 has a rod 77 which reciprocates by using, for example, an air cylinder as a driving source, and a disk 78 attached to a tip of the rod 77. A diameter of the disk 78 is slightly smaller than the inside diameter of the filter 73.

According to the cleaning mechanism 74 exemplified in FIG. 6, push-out operation or pull-out operation of the disk 78 is performed by the reciprocation of the rod 77, so that the CNT adhered to the inner surface of the filter 73 can be separated in the push-out operation of the disk 78. Note that in order to suppress turbulence of an exhaust gas flow due to contact of the exhaust gas with the disk 78 in the push-out operation or the pull-out operation of the disk 78, a plurality of through holes (not illustrated) are preferably provided as air holes in the disk 78.

The cleaning mechanism 74 exemplified above in FIG. 5 and FIG. 6 operates regularly in using the second exhaust line 70 (FIG. 1). For example, the cleaning mechanism 74 operates three times (three-time rotation or three-time reciprocation) every ten minutes, or operates three times (three-time rotation or three-time reciprocation) when the pressure in the reaction furnace 21 rises to more than a predetermined pressure. Note that the cleaning mechanism 74 may be operated by the worker's manual operation, but is preferably automatically operated at regular intervals or based on the atmosphere condition in the reaction furnace 21 as described above.

The collection apparatus 3 includes a control unit 200. The control unit 200 is, for example, a computer including a CPU, a memory, and the like, and has a program storage unit (not illustrated). Various kinds of programs for controlling operations of the first exhaust line 61 and the second exhaust line 70 which are described later are stored in the program storage unit. For example, the programs for controlling opening/closing operation of the partition valve 53, opening/closing operation of the valves 56a, 57a, 61a, 70a provided for the collection apparatus 3, and the like are stored in the program storage unit. Note that the above programs are ones recorded in a computer-readable storage medium, or may be ones installed in the control unit 200 from the storage medium.

The CNT manufacturing apparatus 1 according to this embodiment is configured as above. Note that materials of members constituting the CNT manufacturing apparatus 1 are not particularly limited as long as they do not inhibit expression of the operation and effect explained in this description, and, for example, stainless steel or rolled steel for general structure (SS material) is employed. Further, members of the members constituting the CNT manufacturing apparatus 1 with which the CNTs may come into contact may be subjected to a Teflon (registered trademark) coating thereon.

### (Carbon nanotube collection method)

Next, one example of the CNT collection method using the collection apparatus 3 will be explained. Note that such operations able to be automatically performed as opening and closing of the valves for the supply or the stop of the gases and opening and closing of the partition valve 53 to be explained below are automatically performed through the control unit 200, but may be performed by the worker's manual operation.

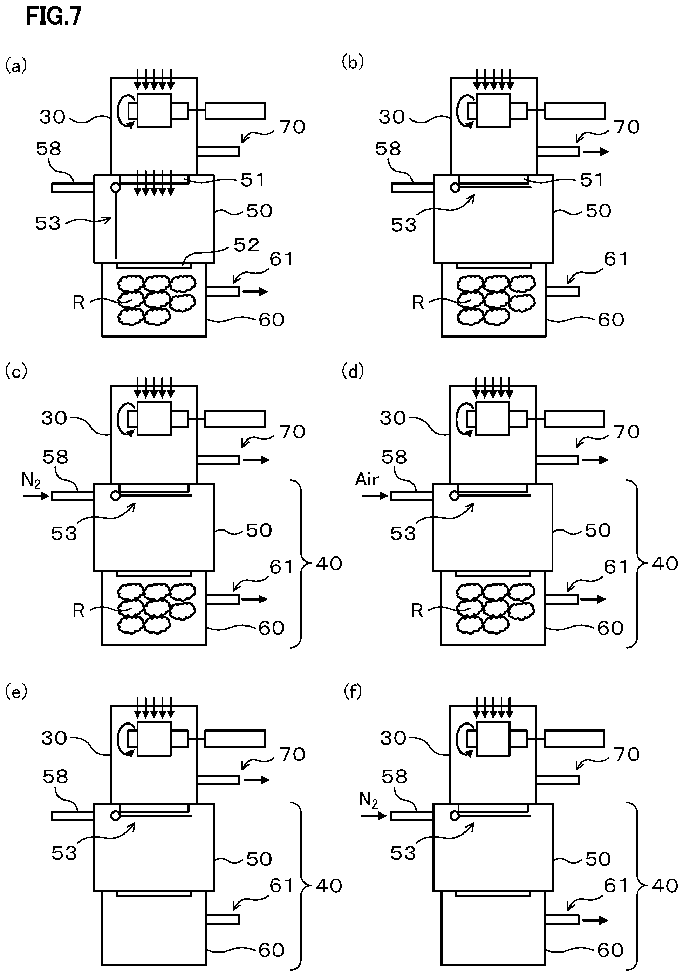

First, as illustrated in FIG. 7(a), in a storage step of storing CNTs in the storage container 60, the partition valve 53 in the housing 50 is opened, and the first opening part 51 is in an open state. In this step, the gas supply from the gas supply pipe 58 is stopped, and the exhaust from the first exhaust line 61 is performed, so that the atmosphere in the collection room 40 is the carrier gas atmosphere supplied to the reaction furnace 21 of the production apparatus 2 (FIG. 1). Note that in this embodiment, the second exhaust line 70 is not used in the storage step of the CNTs, but exhaust from the second exhaust line 70 may be performed in a main step. That is, the exhaust from at least the first exhaust line 61 is performed in the storage step of the CNTs.

At this moment, the formation of the CNT wound body R by winding the CNT (FIG. 2) and the separation of the CNT wound body R (FIG. 3) are performed in the winding room 30. The CNT wound body R separated here passes through the first opening part 51 and the second opening part 52 from the winding room 30, and falls to the storage container 60. The CNT wound bodies R are stored in the storage container 60 by repeating such winding and separation of the CNTs.

Next, as illustrated in FIG. 7(b), at the stage where the storage step of the CNTs has been performed for a predetermined time, or a predetermined amount of the CNTs has been stored in the storage container 60, the exhaust from the second exhaust line 70 is started. Thereafter, the exhaust from the first exhaust line 61 is stopped, and the partition valve 53 is closed to close the first opening part 51. This causes the atmosphere in the winding room 30 and the atmosphere in the housing 50 to be blocked between each other.

In this step, the production apparatus 2 (FIG. 1) is not stopped, and the carrier gas supplied to the reaction furnace 21 is exhausted from the second exhaust line 70, so that the production and the winding of the CNTs can be continued.

Next, as illustrated in FIG. 7(c), the incombustible gas such as, for example, a nitrogen gas is supplied from the gas supply pipe 58 and the exhaust from the first exhaust line 61 is resumed to replace the atmosphere in the collection room 40 with the incombustible gas. A hydrogen gas which is a combustible gas is contained in the carrier gas, and thus the atmosphere in the collection room 40 is preferably replaced with the incombustible gas in this manner.

Next, as illustrated in FIG. 7(d), the gas supplied from the gas supply pipe 58 is changed from the incombustible gas to air to replace the atmosphere in the collection room 40 with air. At this time, in a case where the oxygen concentration meter 63 (FIG. 1) is installed, for example, when an oxygen concentration in the exhaust gas in the first exhaust line 61 becomes a predetermined value or more, the atmosphere in the collection room 40 can be judged as being replaced with air.

Note that temperatures of the above incombustible gas and air which are supplied to the collection room 40 only need to be an ordinary temperature (for example, 20 to 25°C).

Next, as illustrated in FIG. 7(e), after replacing the atmosphere in the collection room 40 with air, the supply of air from the gas supply pipe 58 and the exhaust from the first exhaust pipe 61 are stopped, and the door (not illustrated) provided on the storage container 60 is opened to collect the CNT wound bodies R. Note that when the collection basket 64 illustrated in FIG. 4 is installed in the storage container 60, the collection basket 64 in which the CNT wound bodies R are stored is taken out to install another collection basket in an empty state.

Further, in this step, an outflow of the atmosphere in the collection room 40 and an inflow of outside air into the collection room 40 occur via the door (not illustrated) opened in collecting the CNT wound bodies R, but the atmosphere in the collection room 40 and the atmosphere in the winding room 30 are blocked between each other by the partition valve 53. This prevents an inflow of the atmosphere from the collection room 40 to the winding room 30 side from occurring, and the atmosphere in the winding room 30 is held in a state suitable for the production of the CNTs.

Next, as illustrated in FIG. 7(f), the supply of the incombustible gas from the gas supply pipe 58 and the exhaust from the first exhaust line 61 are resumed to replace the atmosphere in the collection room 40 with the incombustible gas atmosphere. At this time, in a case where the oxygen concentration meter 63 (FIG. 1) is installed, for example, when an oxygen concentration in the exhaust gas becomes a predetermined value or less, the atmosphere in the collection room 40 can be judged as being replaced with the incombustible gas.

Then, after replacing the atmosphere in the collection room 40 with the incombustible gas atmosphere, the exhaust from the second exhaust line 70 and the supply of the incombustible gas from the gas supply pipe 58 are stopped to open the partition valve 53. This causes the collection apparatus 3 to return to the same state as that in the step illustrated in FIG. 7(a), and the steps of winding and storing the CNTs and the collection step are repeated.

In the CNT collection method according to this embodiment explained above, the atmosphere is blocked between the winding room 30 and the collection room 40, and the exhaust line of the carrier gas can be changed from the first exhaust line 61 to the second exhaust line 70. Consequently, the exhaust from at least the second exhaust line 70 is possible in collecting the CNTs, so that the production of the CNTs can be continued.

That is, such a stop of the CNT production apparatus as is performed in conventional collection work of the CNT is unnecessary, so that a time to complete the manufacture of a desired amount of the CNTs can be significantly shortened during mass manufacturing.

Further, closing the first opening part 51 in collecting the CNTs to prevent outside air at low temperatures from flowing into the reaction furnace 21 at high temperatures enables a longer operating life of the reaction furnace 21. The reason why this effect is obtained is as follows.

For example, in a case of forming the reaction furnace 21 of, for example, ceramic, when outside air flows into the reaction furnace 21 at high temperatures, the reaction furnace 21 is likely to be damaged due to a thermal shock caused by a temperature difference. Further, for example, in a case of forming the reaction furnace 21 of carbon, when outside air flows into the reaction furnace 21 at high temperatures, the carbon of the reaction furnace 21 is likely to be rapidly oxidized to burn out.

On the other hand, in the collection apparatus 3 according to this embodiment, even though outside air flows into the storage container 60 in collecting the CNTs, the first opening part 51 of the housing 50 is closed. This prevents outside air at low temperatures from flowing into the reaction furnace 21 at high temperatures, so that the longer operating life of the reaction furnace 21 can be achieved without causing such problems as described above.

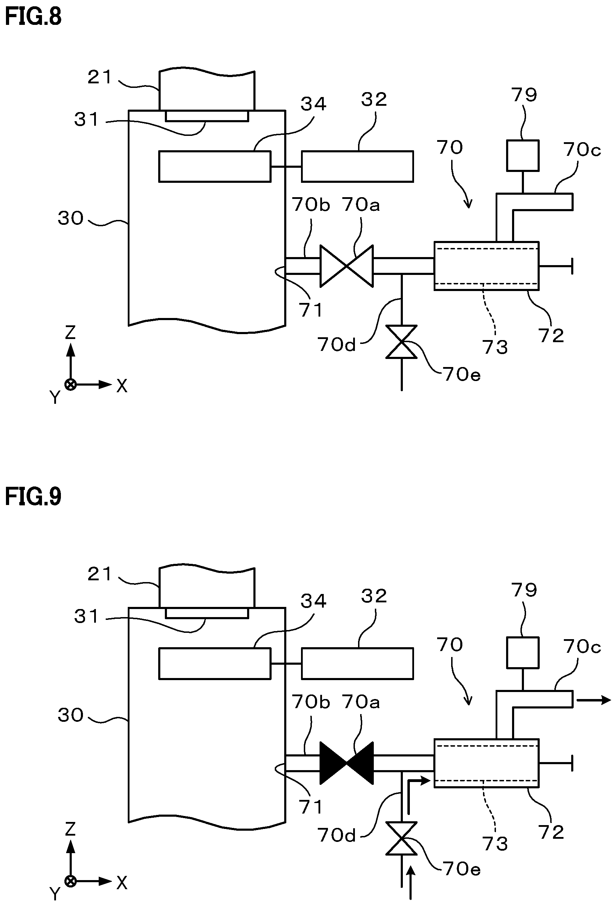

Note that as illustrated in FIG. 8, in the above second exhaust line 70, a gas supply pipe 70d for supplying the incombustible gas and a valve 70e are preferably provided between the valve 70a and the enlarged-diameter part 72. The reason is as follows.

When the second exhaust line 70 is not used, air remains inside the exhaust pipe 70b, the enlarged-diameter part 72, and the exhaust pipe 70c on a downstream side of the valve 70a due to the replacement work of the filter 73, or the like. When the valve 70a is opened for the change of the exhaust line from the first exhaust line 61 (FIG. 1) to the second exhaust line 70 with this state kept, the air remaining inside the exhaust pipe 70b, the enlarged-diameter part 72, and the exhaust pipe 70c sometimes flows back to the winding room 30 and reaction furnace 21 sides.

On the other hand, as long as the above incombustible gas supply mechanism is provided in the second exhaust line 70, it is possible to supply the incombustible gas to the downstream side of the valve 70a and to purge the air inside the exhaust pipe 70b, the enlarged-diameter part 72, and the exhaust pipe 70c with the incombustible gas before the valve 70a is opened, as illustrated in FIG. 9. This makes it possible to suppress a backflow of air to the winding room 30 and reaction furnace 21 sides to improve a quality of the produced CNT. Note that the valve completely painted black in the figure means that it is in a fully-closed state.

When the incombustible gas supply mechanism is provided in the second exhaust line 70, an oxygen concentration meter 79 is preferably provided in the exhaust pipe 70c on the downstream side of the enlarged-diameter part 72. This allows monitoring of an amount of the air remaining inside the exhaust pipe 70b, the enlarged-diameter part 72, and the exhaust pipe 70c. This allows the valve 70a to be opened at timing when an oxygen concentration in the pipes decreases sufficiently, and allows a backflow suppression effect of air to the winding room 30 side to be increased.

By the way, in the steps of using the second exhaust line 70 illustrated in FIG. 7(b) to FIG. 7(e), the filter 73 is cleaned regularly by the cleaning mechanism 74 exemplified in FIG. 5 or FIG. 6. This causes the CNT to separate from the inner surface of the filter 73, but the separated CNT accumulates in the enlarged-diameter part 72 without being discharged from the enlarged-diameter part 72. The CNT remaining in the enlarged-diameter part 72 has a dust shape with a length of approximately 1 mm, and such clogging of the enlarged-diameter part 72 as makes the use of the second exhaust line 70 impossible does not occur early, but when an amount of the dust-shaped CNT exceeds an acceptable amount, the maintenance work such as a removal of the dust-shaped CNT or filter replacement is necessary.

Such maintenance work may be performed in, for example, the step of not using the second exhaust line 70 illustrated in FIG. 7(a). However, when the maintenance work fails to be completed before the collection step of the CNT wound bodies R is started, the second exhaust line 70 cannot be used, so that the production apparatus of the CNT is required to be stopped.

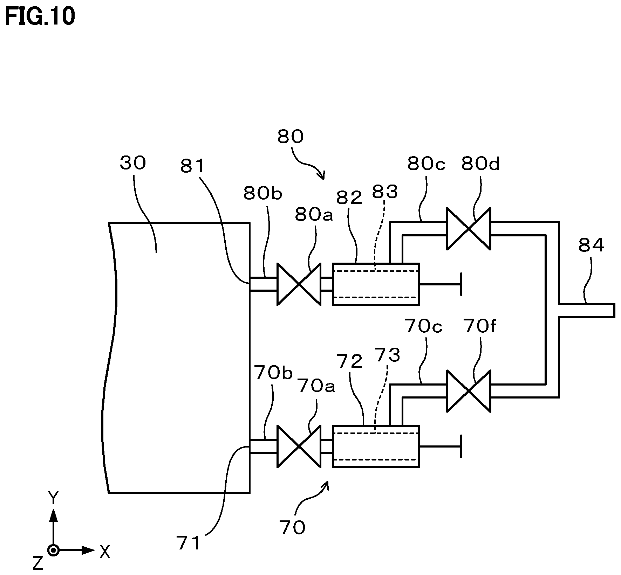

Consequently, also in such a case, in order to continue the production of the CNTs to improve productivity, a third exhaust line 80 is preferably provided in addition to the second exhaust line 70 as illustrated in FIG. 10.

### (Third exhaust line)

The third exhaust line 80 exemplified in FIG. 10 has the same configuration as that of the second exhaust line 70, and is provided with a valve 80a and an exhaust pipe 80b. Note that FIG. 10 is a figure in which the collection apparatus 3 (FIG. 1) is viewed from above. The exhaust pipe 80b is connected to an exhaust port 81 formed in the winding room 30, and the exhaust port 81 and the exhaust port 71 to which the second exhaust line 70 is connected are spaced along the Y direction at the same height.

Further, the third exhaust line 80 has an enlarged-diameter part 82 on a downstream side of the valve 80a, and a filter 83 and the cleaning mechanism as exemplified in FIG. 5 or FIG. 6 are provided inside the enlarged-diameter part 82. Another exhaust pipe 80c is connected to an outer peripheral surface of the enlarged-diameter part 82, and a valve 80d is provided in the exhaust pipe 80c.

The exhaust pipe 70c of the second exhaust line 70 and the exhaust pipe 80c of the third exhaust line 80 are each connected to a merging pipe 84, and the exhaust gas of the second exhaust line 70 and the exhaust gas of the third exhaust line 80 are exhausted from the merging pipe 84.

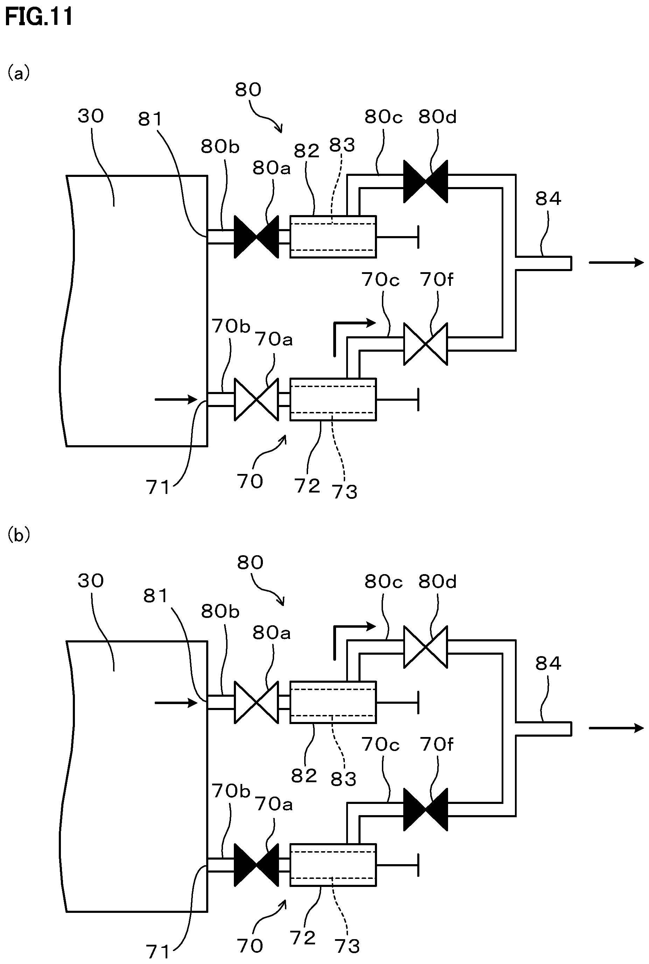

When such a third exhaust line 80 is installed, it is possible to change a state of performing the exhaust from the second exhaust line 70 and a state of performing exhaust from the third exhaust line 80 as illustrated in FIGs. 11. Note that the valves completely painted black in the figures mean that they are in a fully-closed state.

FIG. 11(a) is a view illustrating a state of using the second exhaust line 70. In this state, the two valves 80a, 80d of the third exhaust line 80 are closed, so that the exhaust from the exhaust port 81 is not performed, and the third exhaust line 80 is not used.

On the other hand, when the amount of the dust-shaped CNT remained in the enlarged-diameter part 72 of the second exhaust line 70 exceeds the acceptable amount to make the maintenance work of the enlarged-diameter part 72 necessary, the two valves 70a, 70e of the second exhaust line 70 are closed to open the two valves 80a, 80d of the third exhaust line 80 as illustrated in FIG. 11(b).

Thus, the atmosphere in the winding room 30 can be exhausted from the third exhaust line 80, and the storage step and the collection step of the CNTs illustrated in FIG. 7(a) to FIG. 7(f) can be repeated even without using the second exhaust line 70. Further, the maintenance work of the second exhaust line 70 is performed while using the third exhaust line 80, and after a completion of the work, the exhaust line to be used is changed from the third exhaust line 80 to the second exhaust line 70. Thereafter, maintenance work of the third exhaust line 80 is also performed as necessary.

As explained above, the installation of the third exhaust line 80 enables the production of the CNTs to continue even when the maintenance work of the second exhaust line 70 takes a long time.

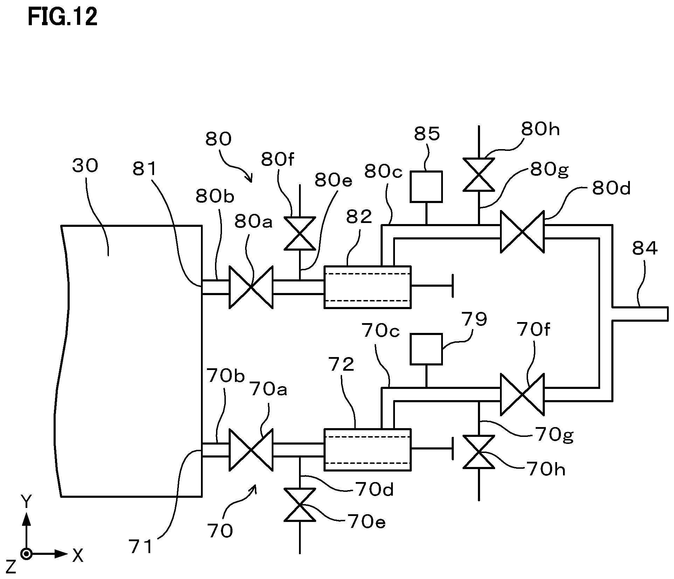

Note that as illustrated in FIG. 12, when the third exhaust line 80 is installed, a mechanism for supplying the incombustible gas and a mechanism for exhausting the incombustible gas are preferably provided in each of the second exhaust line 70 and the third exhaust line 80.

More specifically, in the second exhaust line 70, the gas supply pipe 70d and a valve 70f explained in FIG. 8 are provided, and moreover, an exhaust pipe 70g connected to the exhaust pipe 70c and a valve 70h are provided between the oxygen concentration meter 79 and the valve 70f.

Further, in the third exhaust line 80, a gas supply pipe 80e, connected to the exhaust pipe 80b, for supplying the incombustible gas and a valve 80f are provided between the valve 80a and the enlarged-diameter part 82. Moreover, an exhaust pipe 80g connected to the exhaust pipe 80c and a valve 80h are provided between an oxygen concentration meter 85 and the valve 80d.

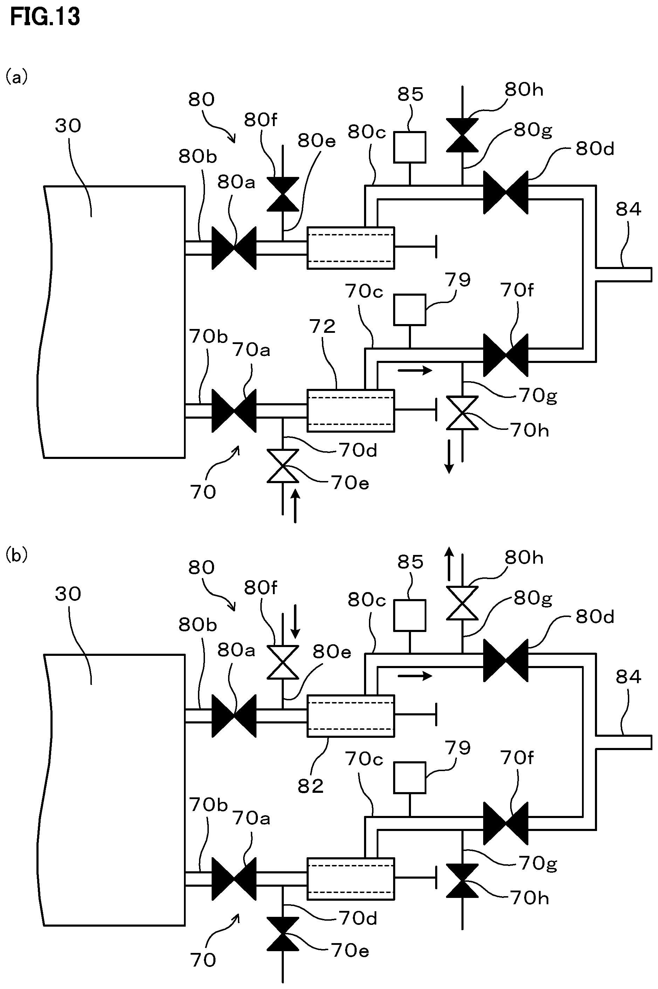

In the second exhaust line 70 and the third exhaust line 80 with such a configuration, before starting the exhaust of the winding room 30 from the second exhaust line 70, the valves 70a, 70f are brought into a closed state, and the valves 70e, 70h are brought into an open state to supply the incombustible gas from the gas supply pipe 70d as illustrated in FIG. 13(a). This causes the incombustible gas to flow through the exhaust pipe 70b, the enlarged-diameter part 72, the exhaust pipe 70c, and the exhaust pipe 70g on the downstream side of the valve 70a to exhaust air remained in the pipes. Thereafter, the exhaust from the second exhaust line 70 illustrated in FIG. 11(a) is started by closing the valves 70e, 70h and opening the valves 70a, 70f.

On the other hand, before starting the exhaust of the winding room 30 from the third exhaust line 80, the valves 80a, 80d are brought into a closed state, and the valves 80f, 80h are brought into an open state to supply the incombustible gas from the gas supply pipe 80e as illustrated in FIG. 13(b). This causes the incombustible gas to flow through the exhaust pipe 80b, the enlarged-diameter part 82, the exhaust pipe 80c, and the exhaust pipe 80g on the downstream side of the valve 80a to exhaust air remained in the pipes. Thereafter, the exhaust from the third exhaust line 80 illustrated in FIG. 11(b) is started by closing the valves 80f, 80h and opening the valves 80a, 80d.

Incidentally, in the examples in FIG. 10 to FIG. 13, the exhaust port 71 for the second exhaust line 70 and the exhaust port 81 for the third exhaust line 80 are provided separately, but, for example, only the exhaust port 71 may be provided to connect the exhaust pipe 80b of the third exhaust line 80 to the exhaust pipe 70b of the second exhaust line 70. In other words, the third exhaust line 80 may be branched from the second exhaust line 70.

### (Compression mechanism)

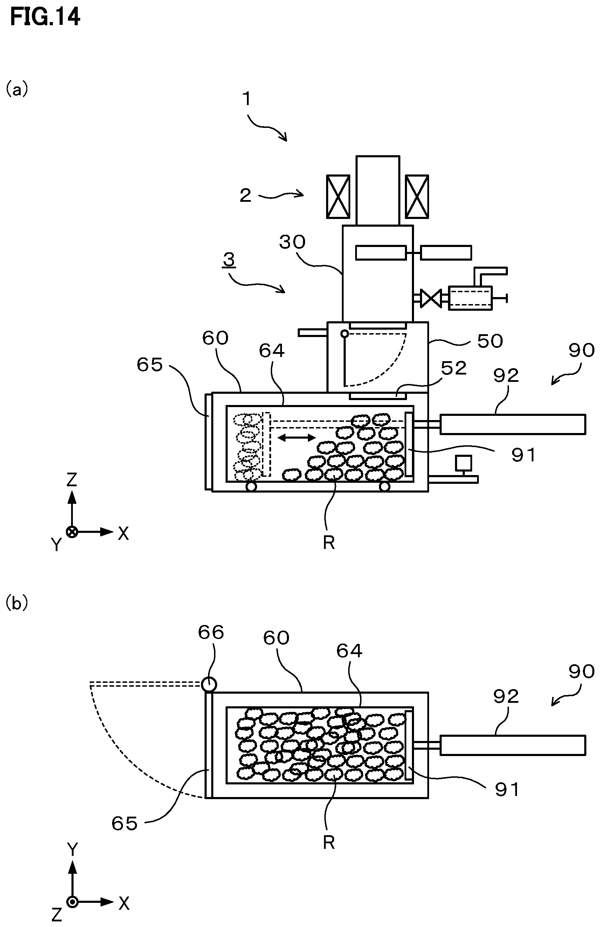

In the collection apparatus 3, a compression mechanism 90 for compressing the CNTs may be provided as exemplified in FIGs. 14. Note that FIG. 14(a) is a schematic view for explaining the collection apparatus 3 in which the compression mechanism 90 is installed, and FIG. 14(b) is a schematic view of viewing the storage container 60 in which the compression mechanism 90 is installed from above. In either of the figures, the illustration of a wall surface of the storage container 60 on the near side of the paper plane is omitted.

In the example illustrated in FIGs. 14, the storage container 60 has a shape in a rectangular parallelepiped shape expanding along a compression direction of the CNTs. The collection basket 64 in a mesh shape which is arranged inside the storage container 60 is formed in a rectangular parallelepiped shape to fit in the shape of the storage container 60, and the collection basket 64 is installed in a position where it can house the CNT wound bodies R falling from the second opening part 52 of the housing 50.

Further, wheels are attached to the collection basket 64, and the collection basket 64 can horizontally move. A door 65 which opens and closes a doorway of the collection basket 64 is provided on the side surface portion of the storage container 60, and the door 65 turns about a pivot shaft part 66 extending in the vertical direction (Z direction).

The compression mechanism 90 is provided at a side surface portion facing the side surface portion on which the door 65 of the storage container 60 is installed. The compression mechanism 90 has a pressing plate 91 as a pressing member, and a driving part 92 connected to the pressing plate 91.

The pressing plate 91 is arranged at a position where it comes close to an inner surface of the collection basket 64 and does not inhibit the fall of the CNT wound body R (initial position) under the second opening part 52 and inside the collection basket 64. The driving part 92 is composed of, for example, a cylinder capable of reciprocating, and the driving part 92 allows the pressing plate 91 to reciprocate in the collection basket 64.

In the compression mechanism 90 having the above configuration, the pressing plate 91 moves forward regularly in the step of storing the CNT wound bodies R in the collection basket 64, and thus the CNT wound bodies R accumulated in the collection basket 64 are compressed. Thereafter, the pressing plate 91 retracts to the initial position, and falling fresh CNT wound bodies R accumulate in the collection basket 64.

Note that a stroke amount of the pressing plate 91 is preferably varied according to a storage amount of the CNTs in the collection basket 64 so as to prevent the CNT wound bodies R from being excessively compressed. For example, the stroke amount of the pressing plate 91 may be set in several steps in advance to reduce the stroke amount step by step according to the number of times of operation of the pressing plate 91.

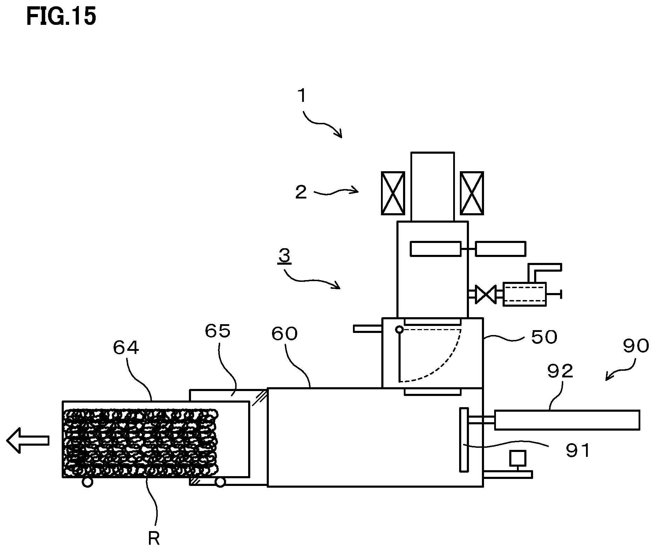

The above compression of the CNT wound bodies R in the collection basket 64 and the storage of the CNT wound bodies R into the collection basket 64 are repeated, and when a sufficient amount of CNT wound bodies R is stored in the collection basket 64, the door 65 is opened to take the collection basket 64 out of the storage container 60 as illustrated in FIG. 15. Note that an opening through which the pressing plate 91 can pass (not illustrated) is formed in a side surface portion of the collection basket 64, and the pressing plate 91 is located in the storage container 60 even though the collection basket 64 is carried out of the storage container 60.

Thereafter, another collection basket in an empty state is installed in the storage container 60, and the door 65 is closed to continuously perform the storage step of CNTs.

As described above, using the compression mechanism 90 allows the compression of the CNT wound bodies R stored in the storage container 60 during the production of the CNTs. This expands a housing space of the CNT wound bodies R in the storage container 60 to allow the production of the CNTs to continue. This allows not only an increase in a collection amount of the CNTs every time CNTs are collected but also a reduction in a frequency of the CNT collection step, so that a manufacturing time of the CNTs can be secured for a longer time.

In particular, the CNTs are light in weight, and thus they are not broken by their own weight, and in terms of the nature of a CNT, a CNT wound body R is less likely to roll on a surface of other CNT wound bodies R, and the CNTs stored in the storage container 60 are likely to be bulky. Therefore, it is useful to provide the compression mechanism 90. Note that the compression mechanism 90 is not limited to the configuration explained in this embodiment, but can also be well suited to, for example, a case of providing no collection basket 64.

### (Second Embodiment)

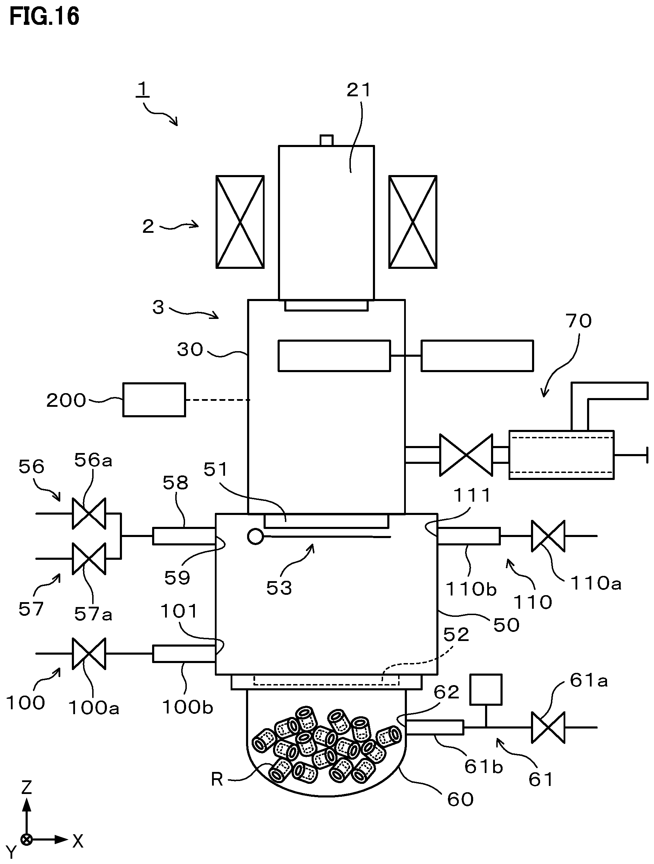

FIG. 16 is an explanatory view illustrating a schematic configuration of a CNT manufacturing apparatus 1 according to a second embodiment. The second embodiment has a main point of difference from the first embodiment in that a storage container 60 is attached to be attachable to and detachable from a housing 50.

The storage container 60 is a container in which a part of an upper surface is open, and can house a plurality of CNT wound bodies R. In the storage container 60, the CNT wound bodies R passed through a first opening part 51 and a second opening part 52 of the housing 50 and fallen therein are temporarily stored.

As described above, the storage container 60 is attached to be attachable to and detachable from the housing 50. A fixing method of the storage container 60 and the housing 50 is not particularly limited as long as a worker can detach the storage container 60 from the housing 50, and, for example, a fixing method using a fixing clamp, or the like is applied.

A non-illustrated sealing member is provided between the upper surface portion of the storage container 60 and a bottom surface portion of the housing 50. With the storage container 60 attached to the housing 50, the provision of the sealing member prevents an atmosphere in the collection room 40 from flowing out from a gap between the housing 50 and the storage container 60 to the outside.

Note that although the illustration is omitted, a support member such as a base or columnar legs for supporting their own weight of a production apparatus 2, a winding room 30, the housing 50, and the like is appropriately provided on the bottom surface portion of the housing 50. This holds a posture of the CNT manufacturing apparatus 1 even when the storage container 60 is detached from the housing 50.

Further, a second supply line 100 of an incombustible gas is provided in addition to a first supply line 56 of the incombustible gas outside the housing 50. The second supply line 100 of the incombustible gas has a valve 100a and a gas supply pipe 100b. The gas supply pipe 100b is connected to a gas supply port 101 formed in a side surface lower portion of the housing 50.

A fourth exhaust line 110 is further provided outside the housing 50. The fourth exhaust line 110 has a valve 110a and an exhaust pipe 110b. The exhaust pipe 110b is connected to an exhaust port 111 formed in a side surface portion facing the side surface portion of the housing 50 in which the gas supply port 101 is formed. The exhaust port 111 is formed on a side upper than the gas supply port 101.

A schematic configuration of a collection apparatus 3 according to the second embodiment has been explained above. Note that in the above explanation, although an explanation of sections having the same configurations as those of the collection apparatus 3 according to the first embodiment is omitted, the sections can be combined with the configurations of the collection apparatus 3 according to the first embodiment within a range where a function of the collection apparatus 3 according to the second embodiment is not inhibited. For example, the collection basket 64 illustrated in FIG. 4, the cleaning mechanism 74 illustrated in FIG. 5 or FIG. 6, and the third exhaust line 80 illustrated in FIG. 8 can also be all well suited to the collection apparatus 3 in the second embodiment.

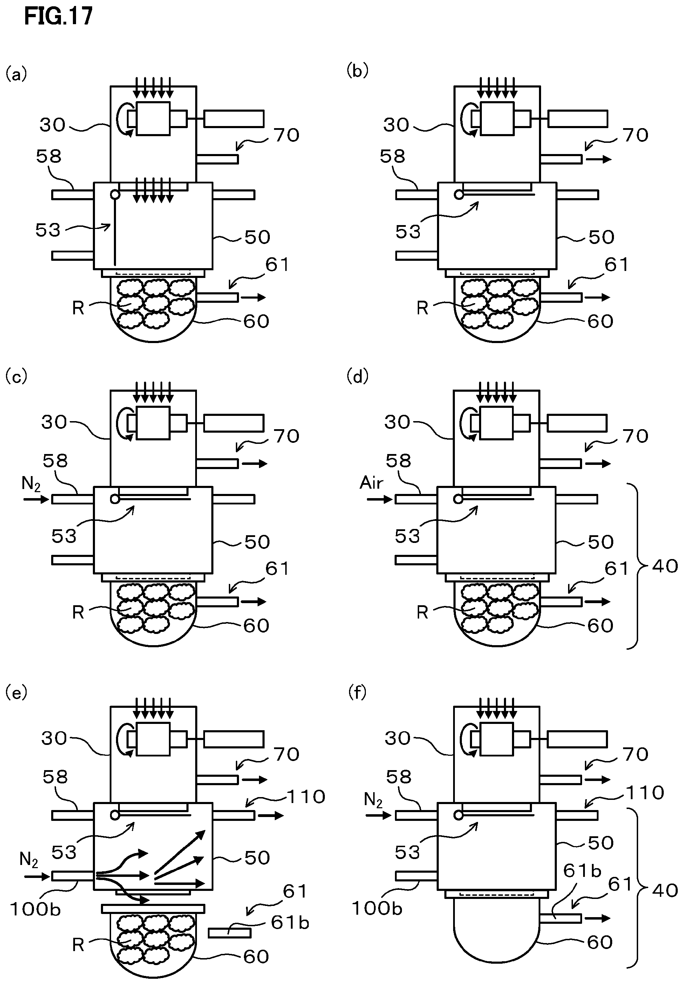

Next, one example of a CNT collection method in a case of using the collection apparatus 3 according to this embodiment will be explained with reference to FIGs. 17. Note that steps in FIG. 17(a) to FIG. 17(d) are similar to the steps in FIG. 7(a) to FIG. 7(d), and thus an explanation is omitted.

After the atmosphere in the collection room 40 is replaced with air in the step illustrated in FIG. 17(d), supply of air from a gas supply pipe 58 and exhaust from a first exhaust line 61 are stopped, and an exhaust pipe 61b of the first exhaust line 61 is detached from the storage container 60 as illustrated in FIG. 17(e). Thereafter, the storage container 60 is detached from the housing 50.

At this moment, supply of the incombustible gas from the gas supply pipe 100b and exhaust from the fourth exhaust line 110 are started. The incombustible gas supplied from the gas supply pipe 100b here flows mainly toward the fourth exhaust line 110 to form an airflow upward from a lower side in the housing 50. Therefore, for example, even though a sealing defect occurs between the winding room 30 and the housing 50 due to a deterioration of a sealing member to thereby cause a gas in the winding room 30 to flow out to the housing 50 side, the flown-out gas can be exhausted from the fourth exhaust line 110.

After collecting the CNT wound bodies R in the storage container 60, the supply of the incombustible gas from the gas supply pipe 100b and the exhaust from the fourth exhaust line 110 are stopped, and the storage container 60 is attached to the housing 50 again, as illustrated in FIG. 17(f). The storage container 60 attached to the housing 50 here is, for example, another storage container in an empty state different from the storage container 60 detached in FIG. 17(e), or the storage container in which another collection basket in an empty state changed with the collection basket 64 illustrated in FIG. 4 is installed.

Further, when the storage container 60 is attached to the housing 50, the exhaust pipe 61b of the first exhaust line 61 is also attached to the storage container 60. Thereafter, supply of the incombustible gas from the gas supply pipe 58 and the exhaust from the first exhaust line 61 are resumed. Then, after the atmosphere in the collection room 40 is replaced with the incombustible gas atmosphere, exhaust from a second exhaust line 70 and the supply of the incombustible gas from the gas supply pipe 58 are stopped to open a partition valve 53. This causes the collection apparatus 3 to return to the same state as that in the step illustrated in FIG. 17(a), and thereafter, a storage step and a collection step of CNTs are repeated.

The collection apparatus 3 according to the second embodiment explained above allows the storage container 60 to be detached from the housing 50, thus facilitating the collection of the CNT wound bodies R in the storage container 60.

Further, in the collection apparatus 3, the second supply line 100 and the fourth exhaust line 110 of the incombustible gas are preferably provided. This allows the gas to be prevented from flowing out to the outside of the housing 50 even though the gas in the winding room 30 flows out from the first opening part 51 due to the deterioration of the sealing member, or the like when the storage container 60 is detached from the housing 50.

In terms of enhancing this effect, the gas supply port 101 communicating with the second supply line 100 illustrated in FIG. 16 is preferably formed on a side lower than the first opening part 51, and further preferably formed near the second opening part 52. This makes it easy for an ascending air current to be formed in the entire interior of the housing 50, and makes it difficult for the gas flown out from the interior of the winding room 30 into the housing 50 to flow out from a lower end of the housing 50.

Further, in terms of enhancing the above effect, the exhaust port 111 communicating with the fourth exhaust line 110 is preferably formed near the first opening part 51. This makes it easy for the gas to be exhausted from the exhaust port 111 without flowing toward the lower side of the housing 50 even though the gas flows out from the winding room 30 into the housing 50.

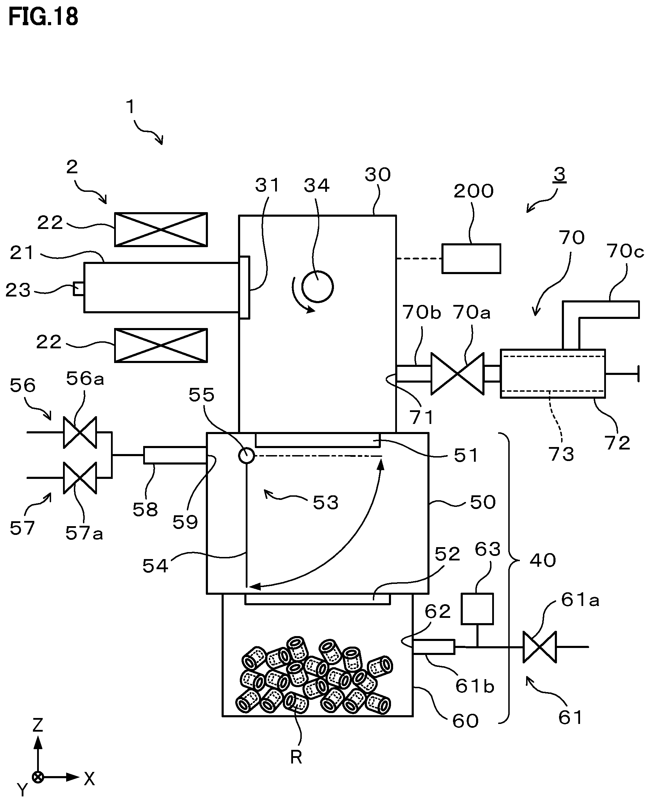

Note that in the CNT manufacturing apparatuses 1 explained in the above first to second embodiments, the production apparatus 2 is arranged over the collection apparatus 3, but may be arranged on a lateral side of the collection apparatus 3. For example, as illustrated in FIG. 18, the reaction furnace 21 of the production apparatus 2 may be attached to a side surface portion of the winding room 30 of the collection apparatus 3.

The winding member 34 in an example illustrated in FIG. 18 is arranged such that the rotation axis is in the Y direction, and the CNT discharged from the opening part 31 communicating with the reaction furnace 21 is wound by the winding member 34 in rotation. The CNT wound body R wound to be formed falls by the winding member 34 being pulled out to the deep side of a paper plane of FIG. 18 with the same separation mechanism as the separation mechanism 36 illustrated in FIG. 3. Thus, the CNT wound body R falls from the winding room 30 to the housing 50, and the CNT wound body R is stored in the storage container 60. The CNT manufacturing apparatus 1 constituted in this manner can also conduct the CNT collection method explained in, for example, FIGs. 7 or FIGs. 17.

Embodiments of the present invention have been explained above, but the present invention is not limited to the embodiments. It should be understood that various changes and modifications are readily apparent to those skilled in the art within the scope of the technical spirit as set forth in claims, and those should also be covered by the technical scope of the present invention.

For example, configuration requirements of the above embodiments can be arbitrarily combined. The operations and effects about the configuration requirements relating to the combination can be obtained as a matter of course from the arbitrary combination, and those skilled in the art can obtain clear other operations and effects from the description herein.

The effects described herein are merely explanatory or illustrative in all respects and not restrictive. The technique relating to this disclosure can offer clear other effects to those skilled in the art from the description herein in addition to or in place of the above effects.

### INDUSTRIAL APPLICABILITY

The present invention is applicable to a collection apparatus and a manufacturing apparatus of a carbon nanotube.

### EXPLANATION OF CODES

1 CNT manufacturing apparatus (carbon nanotube manufacturing apparatus)
2 CNT production apparatus (carbon nanotube production apparatus)
3 CNT collection apparatus (carbon nanotube collection apparatus)
21 reaction furnace
22 heater
23 raw material supply port
30 winding room
31 opening part
32 winding mechanism
33 rotary body
34 winding member
35 driving part
36 separation mechanism
37 cylinder mechanism
40 collection room
50 housing
51 first opening part
52 second opening part
53 partition valve
54 valve element
55 pivot shaft part
56 first supply line of incombustible gas
56a valve
57 air supply line
57a valve
58 gas supply pipe
59 gas supply port
60 storage container
61 first exhaust line
61a valve
61b exhaust pipe
62 exhaust port
63 oxygen concentration meter
64 collection basket
65 door
66 pivot shaft part
70 second exhaust line
70a valve
70b exhaust pipe
70c exhaust pipe
70d gas supply pipe
70e valve
70f valve
70g exhaust pipe
70h valve
71 exhaust port
72 enlarged-diameter part
73 filter
74 cleaning mechanism
75 rod
76 scraper
77 rod
78 disk
79 oxygen concentration meter
80 third exhaust line
80b exhaust pipe
80c exhaust pipe
80d valve
80e gas supply pipe
80f valve
80g exhaust pipe
80h valve
81 exhaust port
82 enlarged-diameter part
83 filter
84 merging pipe
85 oxygen concentration meter
90 compression mechanism
91 pressing plate
92 driving part
100 second supply line of incombustible gas
100a valve
100b gas supply pipe
101 gas supply port
110 fourth exhaust line
110a valve
110b exhaust pipe
111 exhaust port
200 control unit
R CNT wound body (carbon nanotube wound body)

## Claims

1. A carbon nanotube collection apparatus for collecting a carbon nanotube produced by a carbon nanotube production apparatus, the carbon nanotube collection apparatus comprising:
a winding room for winding the carbon nanotube;
a collection room, provided on a side lower than the winding room, for collecting the carbon nanotube;
a first exhaust line which exhausts a gas supplied into the collection room;
an exhaust port to which the first exhaust line is connected; and
a second exhaust line which exhausts a gas supplied into the winding room, wherein:
the winding room comprises:
a winding member which winds the carbon nanotube; and
an exhaust port to which the second exhaust line is connected;
the collection room comprises
a first opening part communicating with the winding room, and is provided with
an opening/closing mechanism which opens and closes the first opening part; and
exhaust from the first exhaust line, exhaust from the second exhaust line, and exhaust from both the first exhaust line and the second exhaust line are configured to be changeable.

2. The carbon nanotube collection apparatus according to claim 1, further comprising
a control unit which controls operation of the first exhaust line and the second exhaust line, wherein
the control unit is configured to execute control of
performing the exhaust from at least the first exhaust line in a step of storing a wound body formed by winding the carbon nanotube in the collection room with the first opening part open, and
performing the exhaust from at least the second exhaust line in a step of collecting the carbon nanotube in the collection room with the first opening part closed.

3. The carbon nanotube collection apparatus according to claim 1, wherein
the exhaust port is located on a side lower than the winding member.

4. The carbon nanotube collection apparatus according to claim 1, wherein
the second exhaust line comprises:
a filter which collects the carbon nanotube in an exhaust gas; and
a cleaning mechanism which separates the carbon nanotube adhered to the filter.

5. The carbon nanotube collection apparatus according to claim 4, further comprising
a third exhaust line which exhausts the gas supplied into the winding room, wherein
the exhaust from the second exhaust line and exhaust from the third exhaust line are configured to be changeable.

6. The carbon nanotube collection apparatus according to claim 1, wherein
a collection basket in a mesh shape which is installed to be attachable to and detachable from the collection room is provided inside the collection room.

7. The carbon nanotube collection apparatus according to claim 1, further comprising
a compression mechanism which compresses the carbon nanotube stored in the collection room.

8. The carbon nanotube collection apparatus according to claim 1, wherein:
the collection room comprises:
a housing; and
a storage container provided under the housing;
the first opening part, the opening/closing mechanism, and a second opening part communicating with the storage container are provided in the housing; and
the storage container is attached to be attachable to and detachable from the housing.

9. A carbon nanotube manufacturing apparatus comprising:
a production apparatus which produces a carbon nanotube; and
the carbon nanotube collection apparatus according to claim 1.

10. A carbon nanotube collection method using the carbon nanotube collection apparatus according to claim 1, the carbon nanotube collection method comprising:
a storage step of storing a wound body formed by winding a carbon nanotube produced by a carbon nanotube production apparatus in the collection room with the first opening part open; and
a collection step of collecting the carbon nanotube in the collection room with the first opening part closed, wherein:
in the storage step, exhaust from at least the first exhaust line is performed; and
in the collection step, exhaust from at least the second exhaust line is performed.

11. The carbon nanotube collection method according to claim 10, wherein
the exhaust with the second exhaust line is performed on a side lower than a winding member which winds the carbon nanotube.

12. The carbon nanotube collection method according to claim 10, wherein
using a cleaning mechanism which separates the carbon nanotube adhered to a filter provided in the second exhaust line, an inner surface of the filter is regularly cleaned.

13. The carbon nanotube collection method according to claim 12, wherein
a third exhaust line is used in place of the second exhaust line when the cleaning of the filter or replacement work of the filter is performed.

14. The carbon nanotube collection method according to claim 10, wherein:
in the storage step, the carbon nanotube is stored in a collection basket in a mesh shape which is installed inside the collection room; and
in the collection step, the collection basket in which the carbon nanotube is stored is changed with another collection basket.

15. The carbon nanotube collection method according to claim 10, wherein
in the storage step, the carbon nanotube stored in the collection room is compressed.

16. The carbon nanotube collection method according to claim 10, wherein:
the collection room comprises:
a housing; and
a storage container attached to be attachable to and detachable from the housing under the housing; and
in the collection step, the storage container is detached from the housing to collect the carbon nanotube in the storage container.
